Europäisches Patentamt

European Patent Office

Office européen des brevets

(11) Veröffentlichungsnummer : **0 208 909**
**B1**

(12) **EUROPÄISCHE PATENTSCHRIFT**

(45) Veröffentlichungstag der Patentschrift :
30.08.89

(51) Int. Cl.⁴ : **A 01 C 15/04, A 01 M 9/00**

(21) Anmeldenummer : 86107858.2

(22) Anmeldetag : 09.06.86

(54) Vorrichtung zum Streuen von Dünger.

(30) Priorität : 15.07.85 DE 3525184
02.11.85 DE 3539005

(43) Veröffentlichungstag der Anmeldung :
21.01.87 Patentblatt 87/04

(45) Bekanntmachung des Hinweises auf die Patenterteilung : 30.08.89 Patentblatt 89/35

(84) Benannte Vertragsstaaten :
DE FR GB NL SE

(56) Entgegenhaltungen :
DE–A– 1 534 194
DE–A– 3 335 276
GB–A– 2 029 125

(73) Patentinhaber : Rauch Landmaschinenfabrik GmbH
Postfach 1107 Landstrasse 14
D-7573 Sinzheim (DE)

(72) Erfinder : Rauch, Norbert, Dipl.-Ing.
Bergseestrasse 49
D-7573 Sinzheim (DE)

(74) Vertreter : Lichti, Heiner, Dipl.-Ing. et al
Patentanwälte Dr. Ing. Hans Lichti Dipl.-Ing. Heiner
Lichti Dipl.-Phys. Dr.rer.nat. Jost Lempert Durlacher
Strasse 31 Postfach 410760
D-7500 Karlsruhe 41 (DE)

EP 0 208 909 B1

**Beschreibung**

Die Erfindung betrifft eine Vorrichtung zum flächigen Streuen von Dünger, bestehend aus einem Fahrzeug, z. B. einem Schlepper, mit einem bordeigenen Hydrauliknetz und einer Zapfwelle sowie einem aufgesattelten oder angehängten Streuaggregat, das einen Vorratsbehälter mit Auslauföffnungen und einstellbaren oder regelbaren, ggfls. hydraulisch angetriebenen Dosierorganen sowie mehrere an diese mit Einlauföffnungen anschließende, zu beiden Seiten und senkrecht zu der Fahrzeuglängsachse sich erstreckende, in unterschiedlichem Abstand an Streuöffnungen endende Streuleitungen und ein Gebläse zum Transportieren und Austragen des Düngers aufweist, das von einem an das Hydrauliknetz oder an eine auf der Zapfwelle sitzende Hydraulikpumpe angeschlossenen Hydraulikmotor angetrieben ist.

Vorrichtungen des eingangs genannten Aufbaus sind unter dem Begriff Gebläsestreuer in einer Vielzahl von Ausführungsformen bekannt. In der Regel erfolgt der Antrieb des Gebläses von der Zapfwelle über eine Gelenkwelle und einen Riementrieb. Diese Kette von Getriebemitteln muß so ausgebildet sein, daß sie der Hubwegung des Streuaggregates vom Boden in die Position für die Normaldüngung und in eine stark angehobene Position für die Spätdüngung folgen kann. Dadurch wird ihr Aufbau aufwendig. Ferner muß ein Freilauf vorgesehen sein, damit bei stehender Zapfwelle das Gebläse mit seiner großen Schwungmasse auslaufen kann. Außerdem ergeben sich für die Montage und Demontage wegen der beengten Raumverhältnisse Schwierigkeiten. Diese Probleme sind bei einem älteren Vorschlag (DE-A-35 13 737) dadurch behoben, daß das Gebläse von einem Hydraulikmotor angetrieben wird, der unmittelbar auf der Gebläseachse sitzt und entweder an das bordeigene Hydrauliknetz des Schleppers oder aber an eine auf der Zapfwelle sitzende Hydraulikpumpe angeschlossen ist. Durch Drosselventile läßt sich die Gebläseleistung ohne Schwierigkeiten variieren, die im übrigen unabhängig von der Drehzahl der Zapfwelle ist. Die notwendigen Übertragungsmittel bestehen aus einfachen Hydraulikleitungen, die sich ohne Schwierigkeiten verlegen, an- und abkoppeln lassen. Die Beweglichkeit des Streuaggregates während der Hubbewegung wird in keiner Weise behindert. Ferner ist eine ortsungebundene Anordnung des Gebläses auf dem Streuaggregat möglich.

Bei den vorgenannten Gebläsestreuern werden als Dosierorgane üblicherweise Nockenräder verwendet, die auf einer unterhalb der Auslauföffnungen des Behälters liegenden Achse angeordnet sind. Im allgemeinen weist der Vorratsbehälter beiderseits der Fahrzeuglängsachse je eine Auslauföffnung bzw. eine Reihe von Auslauföffnungen auf, so daß auch zwei parallel liegende Nockenräder vorhanden sind. Auch diese werden üblicherweise auf mechanischem Wege entweder von der Zapfwelle über eine entsprechende Getriebekette oder aber von einem mitlaufenden Bodenrad her angetrieben. Da die Streumenge pro Zeit- bzw. Flächeneinheit einstellbar sein muß, muß die Getriebeverbindung zwischen Zapfwelle bzw. Laufrad einerseits und den Dosierorganen andererseits ein Stellgetriebe angeordnet sein. Auch dies ist naturgemäß in konstruktiver Hinsicht aufwendig. Ferner erfordert die Umstellung der Drehzahl manuelle Eingriffe, die wiederum zeitraubend sind. Zur Vermeidung dieser Nachteile ist es bekannt (DE-A 33 35 276), auch die Dosierorgane bzw. die sie bildenden Nockenräder mit einem Hydraulikantrieb auszustatten, der wiederum in einfacher Weise über Drosselventile oder dergleichen regelbar ist. Der Hydraulikmotor kann wiederum an das bordeigene Hydrauliknetz des Fahrzeugs- oder an eine auf der Zapfwelle sitzende Hydraulikpumpe angeschlossen sein.

Mit einem hydraulischen Komplett-Antrieb des Gebläses und der Dosierorgane ergeben sich also erhebliche konstruktive Vereinfachungen und vor allem funktions- und bedienungstechnische Vorteile. Aufgrund der Leistungsaufnahme des Gebläses und/oder der Mengenregelung innerhalb der Hydraulikkreise für das Gebläse und die Nockenräder stellt sich das Problem der Ölerwärmung. Ein eigener Ölkühler mit eigenem Kühlkreislauf würde zu Unterbringungsschwierigkeiten, insbesondere aber wiederum zur Erhöhung des Bauaufwandes und damit der Kosten führen.

Ausgehend von der Vorrichtung des eingangs genannten Aufbaus liegt der Erfindung die Aufgabe zugrunde, eine einfache Kühlungsmöglichkeit für den Hydraulikkreislauf vorzusehen.

Diese Aufgabe wird erfindungsgemäß dadurch gelöst, daß in dem Hydraulikkreislauf, in welchem der Hydraulikmotor für das Gebläse und der ggfls. vorgesehene hydraulische Antrieb für die Dosierorgane liegt, ein Ölkühler angeordnet ist und daß als Kühlmedium der vom Gebläse zu den Streuleitungen zugeführten Luftstrom im mittelbaren oder unmittelbaren Wärmeaustausch dient.

Die Erfindung macht sich zur Lösung des Problems der Ölerwärmung ein am Streuaggregat ohnehin vorhandenes Bauteil, nämlich das Gebläse, bzw. den von ihm erzeugten Luftstrom zunutze, um zumindest Spitzenerhitzungen im Hydraulikkreislauf abzuleiten. Dabei kann der Ölkühler in der vom Gebläse erzeugten Luftströmung angeordnet sein, dem Hydrauliköl also die Wärme im unmittelbaren Wärmeaustausch entzogen werden oder aber es steht der Ölkühler in wärmeleitender Verbindung mit einem dem Luftstrom ausgesetzten Bauteil, so daß ein unmittelbarer Wärmeübergang über das Bauteil erfolgt. Mit anderen Worten: Die Ölkühlung erfordert kein gesondertes Kühlmedium mit eigenem Erzeugungsaggregat und auch keinen nennenswerten konstruktiven Aufwand.

Gemäß einer Ausführungsform der Erfindung ist der Ölkühler dem saug- oder druckseitigen Luftstrom des Gebläses ausgesetzt, beispielsweise unmittelbar vor dem Saugstutzen des Gebläses angeordnet. Stattdessen kann an der Druckseite des Gebläses auch ein Teilstrom — ähnlich den Teilströmen für die Streuleitungen — abgezweigt werden und der Ölkühler in diesem Teilstrom angeordnet sein. Dies gibt die Möglichkeit, den Ölkühler an jeder beliebigen, insbesondere platzsparenden Stelle, unterzubringen.

In bevorzugter Ausführung der Erfindung ist vorgesehen, daß der Ölkühler von einem Abschnitt der auf dem Streuaggregat verlegten Hydraulikleitungen gebildet und dieser Leitungsabschnitt in dem vom Gebläse erzeugten Luftstrom oder auf einem von diesem durchströmten Bauteil angeordnet ist.

Diese Ausführung hat den Vorteil, daß zum Ableiten der Ölwärme nicht ein eigener Ölkühler erforderlich ist, sondern hierfür unmittelbar ein Teil der Hydraulikleitung herangezogen wird, die dann so anzuordnen ist, daß sie einen mittelbaren oder unmittelbaren Wärmeaustausch mit der vom Gebläse geförderten Luft ermöglicht.

Gegebenenfalls kann der den Kühler bildende Leitungsabschnitt in ein oder mehr Windungen, Schleifen oder dergleichen geführt sein, um den Ölkühler einerseits an die vorhandenen baulichen Gegebenheiten anzupassen, andererseits auf kleinstmöglichem Raum eine größtmögliche Austauschfläche zu erhalten.

So kann in vorteilhafter Ausbildung der Leitungsabschnitt auf dem Gebläsekasten, dem Druckstutzen des Gebläses oder dem zwischen dem Druckstutzen und den Streuleitungen angeordneten Luftverteiler, ggfls. in Windungen, Schleifen oder dergleichen, verlegt sein. Dabei bietet es sich insbesondere an, den für die Kühlung bestimmten Leitungsabschnitt im Bereich der Ablaufleitung des Hydraulikmotors vorzusehen. Wird dieser Leitungsabschnitt auf dem Gebläsekasten, beispielsweise auf dessen stirnseitigem Abschluß verlegt, so kann er beispielsweise in einer einzigen, zur Gebläseachse konzentrischen Windung verlegt sein.

Statt der vorgenannten Ausbildung kann der Leitungsabschnitt auch als Wendel, gegebenenfalls in mehreren parallelen Zügen, innerhalb des Druckstutzens des Gebläses oder innerhalb des nachgeschalteten Luftverteilers für die Streuleitungen angeordnet sein, um auf diese Weise einen unmittelbaren Wärmeübergang zwischen dem erzeugten Luftstrom und dem Hydraulikkreislauf zu ermöglichen.

In einer weiteren bevorzugten Ausführungsform ist der Oelkühler als Behälter ausgebildet, in den die Rücklaufleitung des Hydraulikmotors mündet und an den die Saugleitung der Hydraulikpumpe angeschlossen ist und der eine mit dem Gehäuse des Gebläses gemeinsame Wandung als Wärmeaustauschfläche aufweist.

Bei dieser Ausführung, bei der die Rücklaufleitung und die Saugleitung an voneinander entfernten Stellen des Behälters angeschlossen sind, weist das Hydrauliköl die geringste Geschwindigkeit im System auf, so daß seine Verweilzeit im Behälter und damit die für den Wärmeaustausch zur Verfügung stehende Zeit am größten ist. Es ergibt sich ferner eine kompakte und platzsparende Bauweise und es läßt sich die Größe der Austauschfläche optimieren. Die Leitungsführung, wie auch die Zugänglichkeit des Gebläses wird in keiner Weise beeinträchtigt.

In einer Ausgestaltung dieser Ausführung ist die gemeinsame Wandung ein Teil der Umfangswand des Gebläsegehäuses, so daß eine sehr große Austauschfläche zur Verfügung steht.

Zweckmäßigerweise ist der den Oelkühler bildende Behälter bei liegendem Gebläse an der der Zapfwelle abgekehrten Umfangswand des Gebläsegehäuses angeordnet und mit einem Einführstutzen versehen. Diese Ausbildung empfiehlt sich insbesondere bei Verwendung einer eigenen Hydraulikpumpe, die an die Zapfwelle angekuppelt ist, da dann der Einfüllstützen gut zugänglich ist.

Außer den beschriebenen Vorteilen bringt erfindungsgemäße Art der Oelkühlung noch einen weiteren Effekt mit sich : Die vom Gebläse erzeugte Förderluft erwärmt sich merklich, so daß der Taupunkt entsprechend verschoben wird und die Luft in der Lage ist, Feuchtigkeit in den Streuleitungen bzw. von dem mit ihr geförderten Dünger aufzunehmen. Dadurch werden Anbackungen von Düngerpartikeln insbesondere im Bereich von Umlenkungen, z. B. an den die Streuöffnungen aufweisenden Rohrkrümmern und den davor angeordneten Prallplatten vermieden.

Nachstehend ist die Erfindung anhand der Zeichnung, die einige Ausführungsbeispiele wiedergibt, beschrieben. In der Zeichnung zeigen :

Fig. 1 eine schematische Seitenansicht einer Ausführungsform der Vorrichtung ;

Fig. 2 eine Draufsicht auf die Vorrichtung gemäß Fig. 1 mit teilweise wiedergegebenem Streuaggregat ;

Fig. 3 eine Ansicht auf die Rückseite mit weiteren Einzelheiten des Streuaggregates ;

Fig. 4 eine Draufsicht auf die Darstellung gemäß Fig. 3 ;

Fig. 5 eine vergrößerte Draufsicht auf die in Fig. 2 gestrichelt wiedergegebene Gebläseanordnung ;

Fig. 6 eine Seitenansicht zu Fig. 5 ;

Fig. 7 eine der Fig. 6 entsprechende Ansicht einer anderen Ausführungsform der Ölkühler-Anordnung ;

Fig. 8 eine Draufsicht auf die Darstellung gemäß Fig. 7 ;

Fig. 9 eine Fig. 5 und 8 entsprechende Draufsicht einer anderen Ausführungsform des Ölkühlers ;

Fig. 10 eine der Fig. 9 entsprechende Draufsicht auf eine weitere Ausführungsform des Ölkühlers ;

Fig. 11 eine Seitenansicht einer weiteren Ausführungsform mit einem Ölkühler-Behälter und

Fig. 12 eine Draufsicht auf die Ausführungsform gemäß Fig. 11

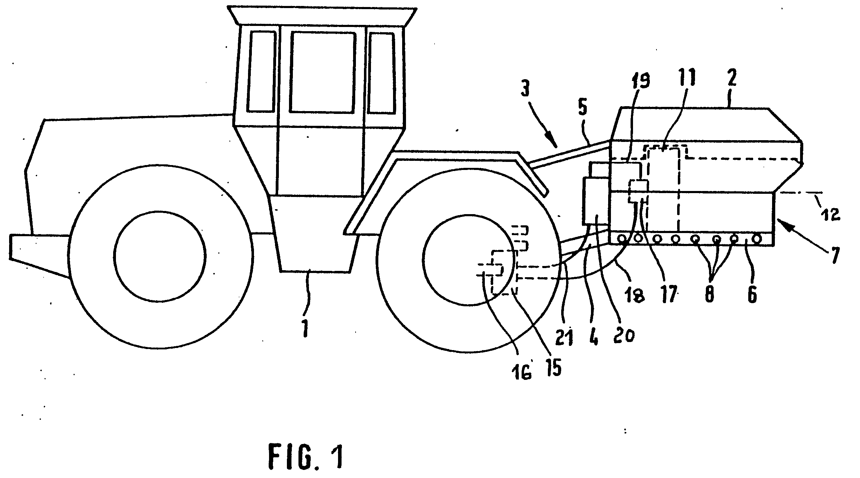

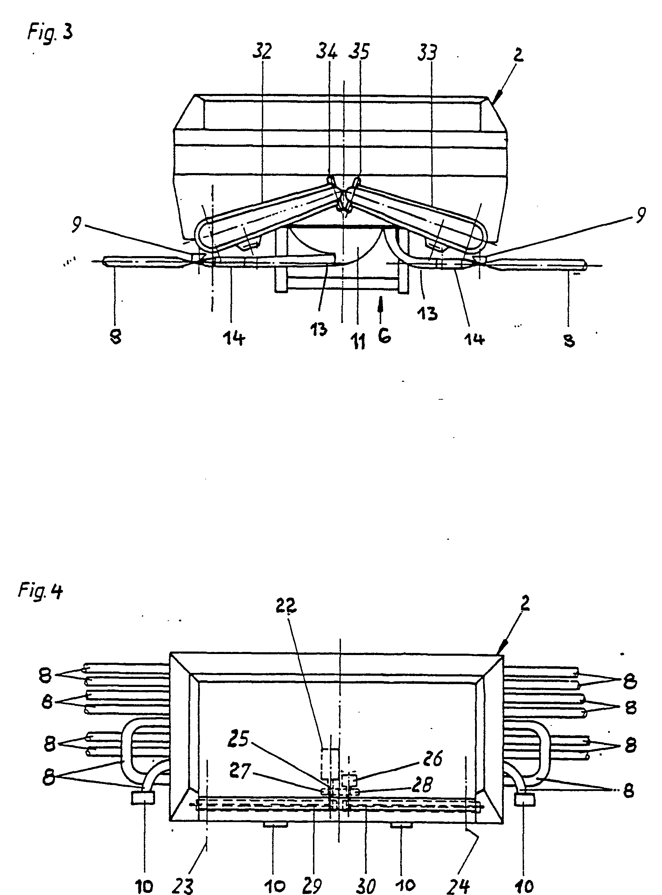

Die in Fig. 1 dargestellte Vorrichtung besteht aus einem Fahrzeug 1, z. B. einem Systemschlepper und einem Streuaggregat 7, das mittels eines Rahmens 6 an dem Oberlenker 5 und den Unterlenkern 4 des Dreipunktgestänges 3 des Fahrzeugs 1 angeschlossen ist. Das Streuaggregat weist einen großvolumigen Vorratsbehälter 2 auf, dessen gestrichelt wiedergegebener Boden sich satteldachartig nach unten erstreckt, so daß unterhalb des Vorratsbehälters 2 eine Art Tunnel entsteht. An den beiden außen liegenden tiefsten Stellen des Bodens sind nicht gezeigte Auslauföffnungen angeordnet, unterhalb denen sich wiederum walzenförmige Dosierorgane in Form von umlaufenden Nockenrädern befinden, die den austretenden Dünger in Einlaufschalen 9 (siehe Fig. 3) einer Vielzahl von Streuleitungen 8 zuführen, die sich senkrecht zur Fahrzeuglängsachse nach beiden Seiten erstrecken und an ihren in unterschiedlichem Abstand endenden Auslauföffnungen mit Verteilerorganen, z. B. Pralltellern 10 (siehe Fig. 4),versehen sind.

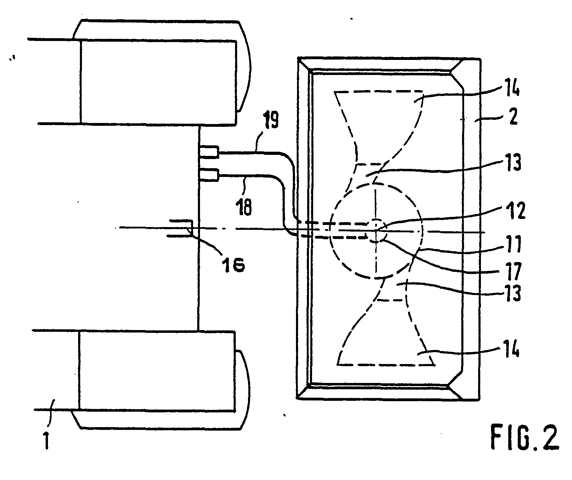

In dem Tunnel unterhalb des Bodens des Vorratsbehälters 2 ist zumindest ein Gebläse 11 angeordnet, das bei der in Fig. 1 wiedergegebenen Ausführungsform senkrecht steht, während es bei der Ausführungsform gemäß Fig. 2 waagerecht liegt und dessen Achse mit 12 angedeutet ist. Das Gebläse weist je einen Druckstutzen 13 auf, die nach gegenüberliegenden Seiten geführt sind und an die sich ein Luftverteiler 14 anschließt, der die Luft auf die einzelnen Streuleitungen 8 verteilt.

Auf der Achse 12 des Gebläses 11 sitzt ein Hydraulikmotor 17, der beim gezeigten Ausführungsbeispiel an eine Hydraulikpumpe 15 angeschlossen ist, die ihrerseits auf der Zapfwelle 16 des Systemschleppers 1 sitzt. Zur Verbindung der Hydraulikpumpe 15 mit dem Hydraulikmotor 17 dient die Druckleitung 18 und die Rücklaufleitung 19, in die ein Hydraulikbehälter 20 eingesetzt ist, der über die Leitung 21 mit der Hydraulikpumpe 15 verbunden ist.

Abweichend von der Ausführungsform gemäß Fig. 1 ist bei dem Ausführungsbeispiel gemäß Fig. 2 der Hydraulikmotor 17 über eine Druckleitung 18 und eine Rücklaufleitung 19 unmittelbar an das Bordnetz des Systemschleppers 1 angeschlossen.

In den Figuren 3 und 4 sind weitere Einzelheiten des Streuaggregates erkennbar. Unterhalb des Tunnels im rückwärtigen Bereich des Vorratsbehälters 2 ist ein weiterer Hydraulikmotor 22 angeordnet, der als Antrieb für die Dosierorgane in Form von Nockenrädern dient, deren Drehachsen in Fig. 4 mit 23 und 24 angedeutet sind. Auf der Abtriebswelle 25 des Hydraulikmotors 22 sitzt ein Stirnrad 27, das mit einem auf einer parallelen Welle 26 sitzenden Stirnrad 28 in Eingriff steht. Auf die das Stirnradpaar 27, 28 überragenden Enden der Wellen 25, 26 sind nicht gezeigte Kettenräder aufgesetzt, die von je einem Kettentrum 29, 30 umschlungen sind, das andererseits über nicht gezeigte Kettenräder an den Achsen 23, 24 der Nockenräder geführt ist. Jedes Kettentrum läuft in einem Kettenkasten 32, 33, die aus hier nicht näher interessierenden Gründen um Achsen 34, 35 senkrecht zur Zeichnungsebene (Fig. 3) schwenkbar sind.

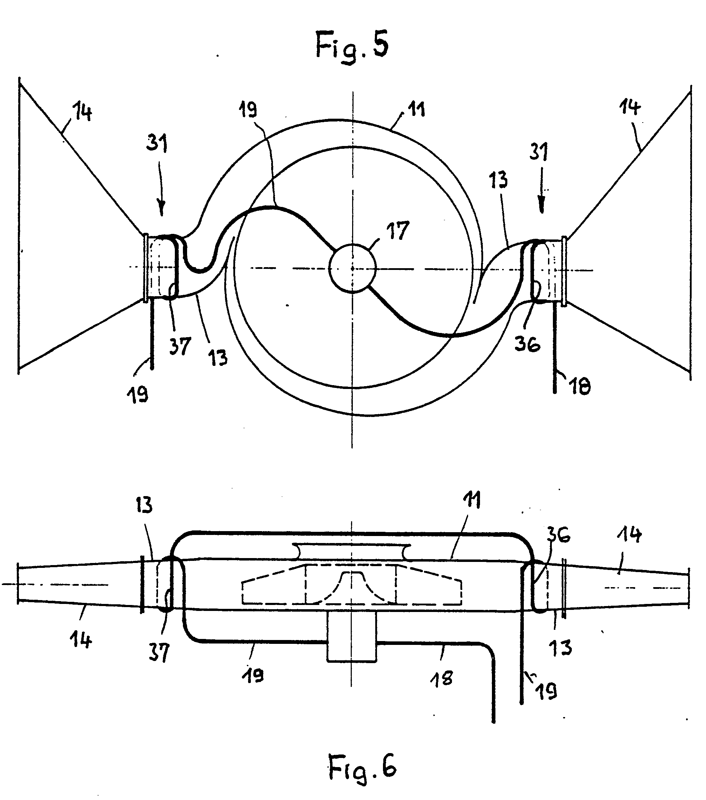

In dem Hydraulikkreislauf, in welchem der Hydraulikmotor 17 (Fig. 1 und 2) für das Gebläse und der Hydraulikmotor 22 (Fig. 4) für die Dosierorgane liegt, ist ein Ölkühler 31 angeordnet. Die Figuren 5 bis 11 zeigen verschiedene Ausführungsformen des Ölkühlers.

Bei dem Ausführungsbeispiel gemäß Fig. 5 ist die Druckleitung 18 für den Hydraulikmotor 17 des Gebläses 11 zunächst in ein oder mehr Wendeln 36 um einen Druckstutzen 13 des Gebläses 11 und anschließend zum Hydraulikmotor 17 geführt. Ebenso ist die Rücklaufleitung 19 zu dem gegenüberliegenden Druckstutzen 14 geführt, den sie mit einigen Wendeln 37 umschlingt, um beispielsweise an das bordeigene Hydrauliknetz (Fig. 2) oder zur Hydraulikpumpe 15 (Fig. 1) zurückgeführt zu werden. In diesem Hydraulikkreislauf liegt auch der Hydraulikmotor 22 für die Dosierorgane, so daß das gesamte Hydrauliköl des auf dem Streuaggregat angeordneten Hydraulikkreislaufs über die Kühler 31 läuft.

Fig. 6 zeigt eine Variante zu der Ausführungsform gemäß Fig. 5, indem die den Ölkühler 31 bildenden Austauschflächen nur im Bereich der Rücklaufleitung 19 vorgesehen sind, indem diese über beiden Druckstutzen 13 geschlungen ist.

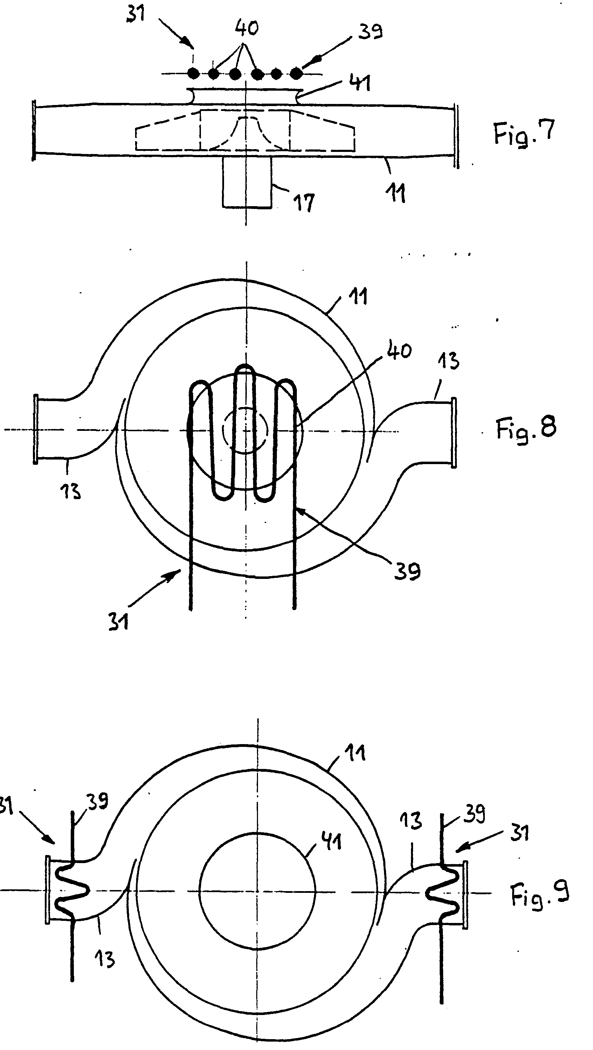

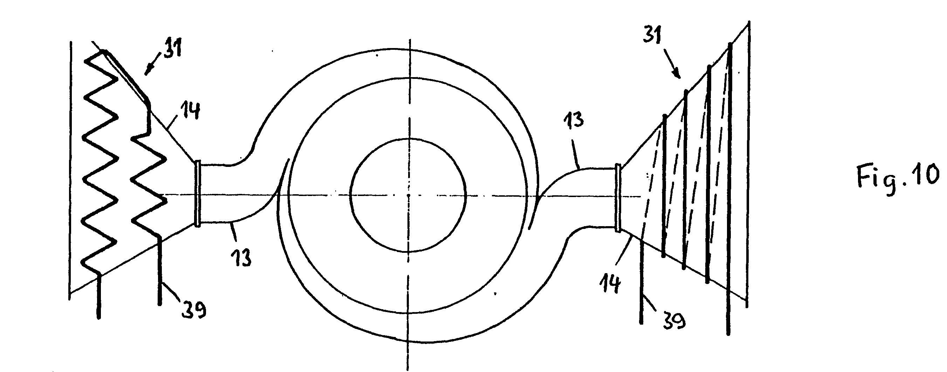

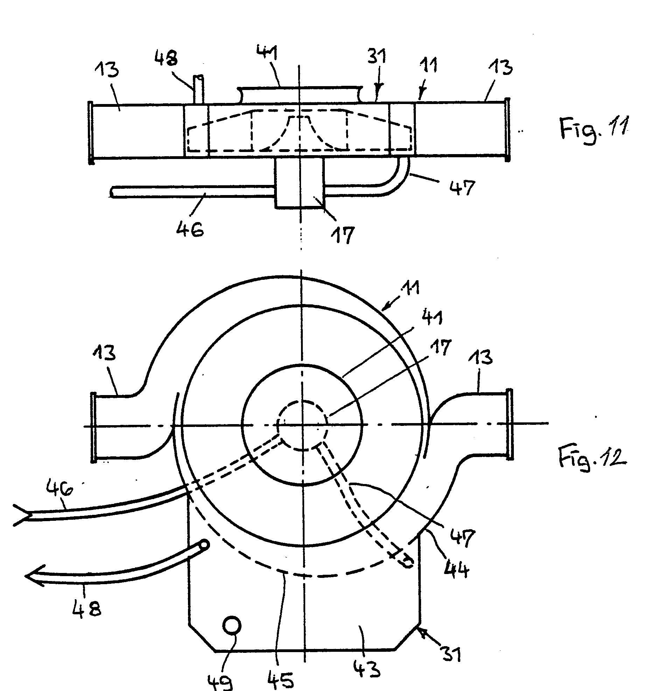

Bei dem Ausführungsbeispiel gemäß Fig. 7 und 8 ist ein Leitungsabschnitt 39 des dem Streuaggregat zugeordneten Hydraulikkreislaufs in mehreren Wendeln 40 zu einer Art Wärmeaustauscher ausgebildet, der vor dem Saugstutzen 41 des Gebläses 11 angeordnet ist. Hier findet also ein unmittelbarer Wärmeübergang zwischen dem Leitungsabschnitt 39 und dem vor dem Saugstutzen 41 entstehenden Luftstrom statt.

Bei dem Ausführungsbeispiel gemäß Fig. 9 mit wiederum direktem Wärmeaustausch ist ein Leitungsabschnitt 39, z. B. die Rücklaufleitung des Hydraulikmotors, unmittelbar durch die Druckstutzen 13 des Gebläses geführt, so daß er von der abgegebenen Luft umströmt wird.

In Fig. 10 sind zwei weitere Ausführungsbeispiele für den Ölkühler 31 gezeigt. Bei dem in der linken Hälfte wiedergegebenen Ausführungsbeispiel ist ein Leitungsabschnitt 39 durch den Luftverteiler 14 in zwei parallelen Wendeln geführt, während bei dem in der rechten Hälfte wiedergegebenen Ausführungsbeispiel der Leitungsabschnitt 19 um den Luftverteiler gewickelt ist. Im ersten Fall findet also ein direkter, im zweiten Fall ein indirekter Wärmeaustausch statt.

Die Zeichnung zeigt nur einige mögliche Ausführungsformen für die Ausbildung des Ölkühlers, wobei mehrere Abwandlungen möglich sind. Beispielsweise kann der zur Kühlung verwendete Leitungsabschnitt auch lediglich in einer einzigen Wendel konzentrisch zur Gebläseachse auf einer der beiden Stirnseiten des Gebläsekastens angeordnet sein. In allen Fällen der indirekten Wärmeübertragung wird man für eine satte Anlage des entsprechenden Leitungsabschnittes auf der Wärmeaustauschfläche sorgen.

Bei dem Ausführungsbeispiel gemäß Fig. 11 und 12 mit einer vorzugsweise liegenden Anordnung des Gebläses 11 (S. Fig. 2) ist der Oelkühler 31 als im wesentlichen prismatischer Behälter 43 ausgebildet. Der Behälter 43 ist an die Umfangswand 44 des Gebläses 11 angeschlossen, beispielsweise angeschweißt, wobei seine eine Begrenzung von dieser Umfangswand gebildet ist, so daß Gebläse 11 und Oelkühler 31 eine gemeinsame Wandung 45 als Wärmeaustauschfläche aufweisen. Der über die Druckleitung 46 mit der Hydraulikpumpe verbundene Hydraulikmotor 17 ist über die Rücklaufleitung 47 an den Behälter 43 angeschlossen, an den wiederum die Saugleitung 48 der Hydraulikpumpe angeschlossen ist. Schließlich weist der Behälter 43 einen Oel-Einfüllstutzen 49 auf, der an einer leicht zugänglichen Stelle angeordnet ist.

## Patentansprüche

1. Vorrichtung zum flächigen Streuen von Dünger, bestehend aus einem Fahrzeug, z. B. einem Schlepper, mit einem bordeigenen Hydrauliknetz und einer Zapfwelle (16) sowie einem aufgesattelten oder angehängten Streuaggregat, das einen Vorratsbehälter (2) mit Auslauföffnungen und einstellbaren oder regelbaren, gegebenenfalls hydraulisch angetriebenen Dosierorganen sowie mehrere an diese mit Einlauföffnungen (9) anschließende, zu beiden Seiten und senkrecht zu der Fahrzeuglängsachse sich erstreckende, in unterschiedlichem Abstand an Streuöffnungen endende Streuleitungen (8) und ein Gebläse (11) zum Transportieren und Austragen des Düngers aufweist, das von einem an das Hydrauliknetz oder an eine auf der Zapfwelle (16) sitzende Hydraulikpumpe (15) angeschlossenen Hydraulikmotor (17) angetrieben ist, dadurch gekennzeichnet, daß in dem Hydraulikkreislauf, in dem der Hydraulikmotor (17) für das Gebläse (11) und der gegebenenfalls vorgesehene hydraulische Antrieb (22) für die Dosierorgane (23, 24) liegt, ein Ölkühler (31) angeordnet ist, und daß als Kühlmedium der vom Gebläse (11) zu den Streuleitungen (8) zugeführte Luftstrom im mittelbaren oder unmittelbaren Wärmeaustausch dient.

2. Vorrichtung nach Anspruch 1, dadurch gekennzeichnet, daß der Ölkühler (31) dem saug- und/oder druckseitigen Luftstrom des Gebläses (11) ausgesetzt ist.

3. Vorrichtung nach Anspruch 1 oder 2, dadurch gekennzeichnet, daß der Ölkühler (31) unmittelbar vor dem Saugstutzen (41) des Gebläses (11) angeordnet ist.

4. Vorrichtung nach einem der Ansprüche 1 bis 3, dadurch gekennzeichnet, daß der Ölkühler (31) von einem Abschnitt (39) der auf dem Streuaggregat (7) verlegten Hydraulikleitungen gebildet und dieser Leitungsabschnitt (39) in dem vom Gebläse (11) erzeugten Luftstrom oder auf einem von diesem durchströmten Bauteil angeordnet ist.

5. Vorrichtung nach Anspruch 4, dadurch gekennzeichnet, daß der den Ölkühler (31) bildende Leitungsabschnitt (39) in ein oder mehr Windungen (36, 37), Schleifen oder dergl. geführt ist.

6. Vorrichtung nach Anspruch 4 oder 5, dadurch gekennzeichnet, daß der Leitungsabschnitt (39) auf dem Gebläsekasten (11), dem Druckstutzen (13) des Gebläses (11) oder dem zwischen dem Druckstutzen und den Streuleitungen (8) angeordneten Luftverteiler (14) verlegt ist.

7. Vorrichtung nach Anspruch 4 oder 5, dadurch gekennzeichnet, daß der Leitungsabschnitt (39) als Wendel (36, 37) gegebenenfalls in mehreren parallelen Zügen, innerhalb des Druckstutzens (13) des Gebläses (11) oder innerhalb des nachgeschalteten Luftverteilers (14) für die Streuleitungen (8) angeordnet ist.

8. Vorrichtung nach Anspruch 1 oder 2, dadurch gekennzeichnet, daß der Oelkühler (31) als Behälter (43) ausgebildet ist, in den die Rücklaufleitung (47) des Hydraulikmotors (17) mündet und an den die Saugleitung (48) der Hydraulikpumpe (15) angeschlossen ist und der eine mit dem Gehäuse des Gebläses (11) gemeinsame Wandung (45) als Wärmeaustauschfläche aufweist.

9. Vorrichtung nach Anspruch 8, dadurch gekennzeichnet, daß die gemeinsame Wandung (45) ein Teil der Umfangswand (44) des Gebläsegehäuses ist.

10. Vorrichtung nach Anspruch 8 oder 9, dadurch gekennzeichnet, daß der den Oelkühler bildende Behälter (43) bei liegendem Gebläse (11) an der der Zapfwelle abgekehrten Umfangswand (44) des Gebläsegehäuses angeordnet und mit einem Einfüllstutzen (49) versehen ist.

## Claims

1. Apparatus for the surface spreading of fertilizer, comprising a vehicle, e. g. a tractor, with its own hyddraulic system and a power take-off (16), as well as a mounted or coupled spreading unit, which has a storage container (2) with outlet openings and adjustable or regulatable, optionally hydraulically driven dosing members, as well as several spreading lines (8) terminating at spreading openings and connected to the dosing members with inlet openings (9) and extending with different spacings on either side and perpendicularly to the vehicle longitudinal axis, as well as a blower (11) for transporting and discharging the fertilizer, which is driven by a hydraulic motor (17) connected to the hydraulic system or to a hydraulic pump (15) located on the power take-off (16), characterized in that in the hydraulic circuit in which is located the hydraulic motor (17) for the blower (11) and the optionally provided hydraulic drive (22) for the dosing members (23, 24) is provided an oil cooler (31) and the air flow supplied by the blower (11) to the spreading lines (8) serves as the cooling medium with direct or indirect heat exchange.

2. Apparatus according to claim 1, characterized in that the oil cooler (31) is exposed to the intake and/or pressure-side air flow of the blower (11).

3. Apparatus according to claims 1 or 2, characterized in that the oil cooler (31) is positioned directly upstream of the intake connection (41) of blower (11).

4. Apparatus according to one of the claims 1 to 3, characterized in that the oil cooler (31) is formed by a portion (39) of the hydraulic lines laid on the spreading unit (7) and said line portion (39) is located in the air flow produced by blower (11) or on a component through which it flows.

5. Apparatus according to claim 4, characterized in that the line portion (39) forming the oil cooler (31) is in the form of one or more turns (36, 37), loops, etc.

6. Apparatus according to claims 4 or 5, characterized in that the line portion (39) is laid on the blower case (11), pressure connection (13) of blower (11) or the air distributor (14) arranged between the pressure connection and the spreading lines (8).

7. Apparatus according to claims 4 or 5, characterized in that the line portion (39) is arranged as a coil (36, 37), optionally in several parallel courses, within the pressure connection (13) of blower (11) or within the following air distributor (14) for the spreading lines (8).

8. Apparatus according to claims 1 or 2, characterized in that the oil cooler (31) is constructed as a container (43), into which issues the return line (47) of the hydraulic motor (17) and to which is connected the suction line (48) of the hydraulic pump (15) and which has a wall (45) common to the casing of blower (11) as the heat exchange surface.

9. Apparatus according to claim 8, characterized in that the common wall (45) is part of the circumferential wall (44) of the blower casing.

10. Apparatus according to claims 8 or 9, characterized in that the container (43) forming the oil cooler, in the case of a horizontal blower (11), is located on the circumferential wall (44) of the blower casing remote from the power take-off and is provided with a filling connection (49).

**Revendications**

1. Dispositif pour épandre sur une surface de l'engrais, constitué par un véhicule, par exemple un tracteur, ayant un réseau hydraulique de bord et une prise de force (16), et par un groupe d"épandage porté ou attelé qui comporte un réservoir (2) muni d'orifices de décharge et des organes doseurs réglables, éventuellement à commande hydraulique, ainsi que plusieurs canalisations d'épandage (8) raccordées à ceux-ci par des orifices d'entrée (9), s'étendant de chaque côté et perpendiculairement à l'axe longitudinal du véhicule et se terminant à des orifices d'épandage à des distances différentes, ainsi qu'un ventilateur (11) pour transporter et distribuer l'engrais, ventilateur actionné par un moteur hydraulique (17) raccordé au réseau hydraulique ou à une pompe hydraulique (15) montée sur la prise de force (16), caractérisé en ce qu'un radiateur d'huile (31) est disposé dans le circuit hydraulique dans lequel se trouvent le moteur hydraulique (17) pour le ventilateur (11) et la commande hydraulique (22) éventuellement prévue pour les organes doseurs (23, 24) et en ce qu'on utilise comme fluide de refroidissement le courant d'air amené par le ventilateur (11) aux canalisations d'épandage (8) pour un échange thermique indirect ou direct.

2. Dispositif selon la revendication 1, caractérisé en ce que le radiateur d'huile (31) est exposé au courant d'air du ventilateur (11) côté aspiration et/ou côté refoulement.

3. Dispositif selon l'une des revendications 1 ou 2, caractérisé en ce que le radiateur d'huile (31) est disposé directement devant l'embout d'aspiration (41) du ventilateur (11).

4. Dispositif selon l'une des revendications 1 à 3, caractérisé en ce que le radiateur d'huile (31) est constitué par une portion (39) des canalisations hydrauliques associées au groupe d'épandage (7) et que cette portion de canalisations (39) est disposée dans le courant d'air produit par le ventilateur (11) ou sur un élément de structure balayé par celui-ci.

5. Dispositif selon la revendication 4, caractérisé en ce que la portion de canalisations (39) constituant le radiateur d'huile (31) forme une ou plusieurs spires (36, 37), boucles ou l'analogue.

6. Dispositif selon l'une des revendications 4 ou 5, caractérisé en ce que la portion de canalisations (39) est disposée sur le carter de ventilateur (11), sur l'embout de refoulement (13) du ventilateur (11) ou sur le diffuseur d'air (14) disposé entre l'embout de refoulement et les canalisations d'épandage (8).

7. Dispositif selon l'une des revendications 4 à 5, caractérisé en ce que la portion de canalisations (39) est disposée sous forme de spires (36, 37), le cas échéant, en plusieurs lignes parallèles, à l'intérieur de l'embout de refoulement (13) du ventilateur (11) ou à l'intérieur du diffuseur d'air (14) pour les canalisations d'épandage (8) montées à la suite.

8. Dispositif selon l'une des revendications 1 ou 2, caractérisé en ce que le radiateur d'huile (31) est réalisé sous forme de réservoir (43), dans lequel débouche la canalisation de retour (47) du moteur hydraulique (17) et auquel la canalisation d'aspiration (48) de la pompe hydraulique (15) est raccordée et qui comporte une paroi commune (45) avec le carter de ventilateur (11) en tant que surface d'échange thermique.

9. Dispositif selon la revendication 8, caractérisé en ce que la paroi commune (45) est une partie de la paroi périphérique (44) du carter de ventilateur.

10. Dispositif selon l'une des revendications 8 ou 9, caractérisé en ce que le réservoir (43) constituant le radiateur d'huile est disposé, le ventilateur (11) étant horizontal, sur la paroi périphérique (44) du carter de ventilateur opposée à la prise de force et qu'il est muni d'un embout de remplissage (49).

FIG. 1

EP 0 208 909 B1

FIG.2

Fig. 3

Fig. 4

# Fig.5

# Fig.6

4

Fig.7

Fig.8

Fig.9

Fig.10

Fig. 11

Fig. 12